# EUROPEAN PATENT APPLICATION

(11) **EP 4 425 026 A1**
(43) Date of publication of application: **04.09.2024**
(21) Application number: 23159451.6
(22) Date of filing: 01.03.2023
(51) Int. Cl.: F16L 25/10, F16L 37/244, F16L 41/03, F24D 3/10

(54) **A PIPE PART AND A CONNECTION BETWEEN TWO PIPE PARTS**

(71) Applicant: Uponor Innovation AB, 15561 Nastola (FI)
(72) Inventor: Rotso, Vesa, 15240 Lahti (FI); Kauppinen, Tuomas, 15320 Lahti (FI); Savolainen, Mika, 15700 Lahti (FI)
(74) Representative: Fenner, Seraina

(57) **Abstract**

A pipe part (1) having a male end (10) comprising an annular male pipe end (11), a connection element (12) for connecting the male end to a pipe part having a female end, which connection element is arranged at an outer surface of the male end at a distance from the male pipe end (11), and a first circumferential sealing surface (13) arranged on an outer surface of the male end at a distance from the male pipe end (11), wherein the first circumferential sealing surface (13) is arranged between the male pipe end (11) and the connection element (12). Further, an annular lip section (14) is provided between the male pipe end (11) and the first circumferential sealing surface (13) so that outer diameter of the lip section (14) increases towards the male pipe end (11).

## Description

### TECHNICAL FIELD

The present invention relates to pipe parts and to the connection of pipe parts.

### BACKGROUND OF THE ART

The document EP 2075496 discloses a manifold segment for integration in a fluid manifold for a heating and/or cooling system. The manifold segment comprises a fluidtight body comprising a fluid passage. The fluid passage comprises thread means for connecting said fluid passage to the manifold in use, such that the manifold segment is positioned in a fixed position relative to said manifold, and the thread means comprise a multi-thread by which the manifold segment is connectable in at least one further fixed position in a different angular orientation relative to the manifold. The manifold segment comprises a sealing ring after the threaded section in assembly direction.

The document WO 99/01701 discloses a water manifold which is formed of a number of elements. Each manifold element comprises a male connector end and a female connector end such that a male connector end allows attachment to the female connector end of a similar manifold segment. The male connector end is provided with external threads and the female connector end is correspondingly provided with internal threads. The male connector end comprises a recess for receiving sealing ring. The recess is arranged after the threads in assembly direction.

### OBJECTIVE OF THE INVENTION

The objective of the device is to provide a pipe part and a connection with enhanced leak-proof and sealing properties while being more robust.

### SUMMARY

According to a first aspect, the present invention provides a pipe part having a male end comprising an annular male pipe end, a connection element for connecting the male end to a pipe part having a female end, which connection element is arranged at an outer surface of the male end at a distance from the male pipe end, and a first circumferential sealing surface arranged on an outer surface of the male end at a distance from the male pipe end. The first circumferential sealing surface is arranged between the male pipe end and the connection element. Further, an annular lip section is provided between the male pipe end and the first circumferential sealing surface so that outer diameter of the lip section increases towards the male pipe end.

The advantage of the pipe part is that it provides more leak-proof pipe part, which is also more robust to external forces.

In an embodiment, the connection element comprises threads, circumferentially extending protrusion, or radially projecting cam.

In an embodiment, inner diameter of the lip section increases towards the male pipe end .

In an embodiment, the first circumferential sealing surface comprises an annular protrusion extending radially outwards from the first circumferential sealing surface. In an embodiment, at least one sealing ring is provided at the first circumferential sealing surface.

In an embodiment, two sealing rings are provided at the first circumferential sealing surface so that the annular protrusion is arranged between the two sealing rings.

In an embodiment, the first circumferential sealing surface is seamless.

According to a second aspect, the present invention provides a connection between two pipe parts, wherein one of the pipe parts comprises a male end and the other pipe part comprises a female end, whereby the two pipe parts are connectable together by positioning the male end to the female end with connection elements. The male end comprises a male pipe end, a male connection element arranged on an outer surface of the male end at a distance from the male pipe end, and a first circumferential sealing surface arranged on the outer surface of the male end at a distance from the male pipe end. The female end comprises a female pipe end, a female connection element arranged on an inner surface of the female end at a distance from the female pipe end, and a second circumferential sealing surface arranged on the inner surface of the female end at a distance from the female pipe end, whereby the first and second circumferential sealing surfaces are positioned aligned with each other to seal the connection between the two pipe parts. The first circumferential sealing surface is arranged between the male pipe end and the male connection element. Further, an annular lip section is provided between the male pipe end and the first circumferential sealing surface so that outer diameter of the lip section increases towards the male pipe end.

The advantage of the connection is that it can handle the internal pressure more efficiently and it is more robust to external forces.

In an embodiment, the connection elements comprise threads or bayonet catch.

In an embodiment, inner diameter of the lip section increases towards the male pipe end.

In an embodiment, the first circumferential sealing surface comprises an annular protrusion extending radially outwards from the first annular sealing surface.

In an embodiment, at least one sealing ring is provided at the first circumferential sealing surface for sealing the connection between the male end and the female end.

In an embodiment, two sealing rings are provided at the first circumferential sealing surface so that the annular protrusion is arranged between the two sealing rings.

In an embodiment, the female end comprises an annular connection surface extending from the second circumferential sealing surface (23) towards a central axis of the female end.

In an embodiment, the annular connection surface is perpendicular to the second circumferential sealing surface.

In an embodiment, the annular connection surface comprises an annular recess for receiving the male pipe end.

In an embodiment, at least one of the first circumferential sealing surface and the second circumferential sealing surface is seamless.

In an embodiment, the two pipe parts are connectable together by positioning the male end to the female end with connection elements, such that the pipe parts are rotated with respect to each other when they are connected.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** shows a pipe part having a first circumferential sealing surface between a male pipe end and a connection element,
**Fig. 2** is a cross-sectional view of figure 1,
**Fig. 3** shows a pipe part having a first circumferential sealing surface having a sealing ring between a male pipe end and a connection element,
**Fig. 4** is a cross-sectional view of figure 3,
**Fig. 5** shows a pipe part having an annular protrusion at the first circumferential sealing surface,
**Fig. 6** is a cross-sectional view of figure 5,
**Fig. 7** shows a pipe part having two sealing rings at the first circumferential sealing surface and an annular protrusion between the sealing rings,
**Fig. 8** is a cross-sectional view of figure 7,
**Fig. 9** shows a pipe part having a male pipe end with a greater diameter than the diameter at the first circumferential sealing surface,
**Fig. 10** is a cross-sectional view of figure 9,
**Fig. 11** shows one pipe part having a male end, and another pipe part having a female end,
**Fig. 12** is a cross-sectional view of two pipe parts connected to each other, **and**
**Fig. 13** is a cross-sectional view of two pipe parts connected to each other and two sealing rings are provided.

### DETAILED DESCRIPTION

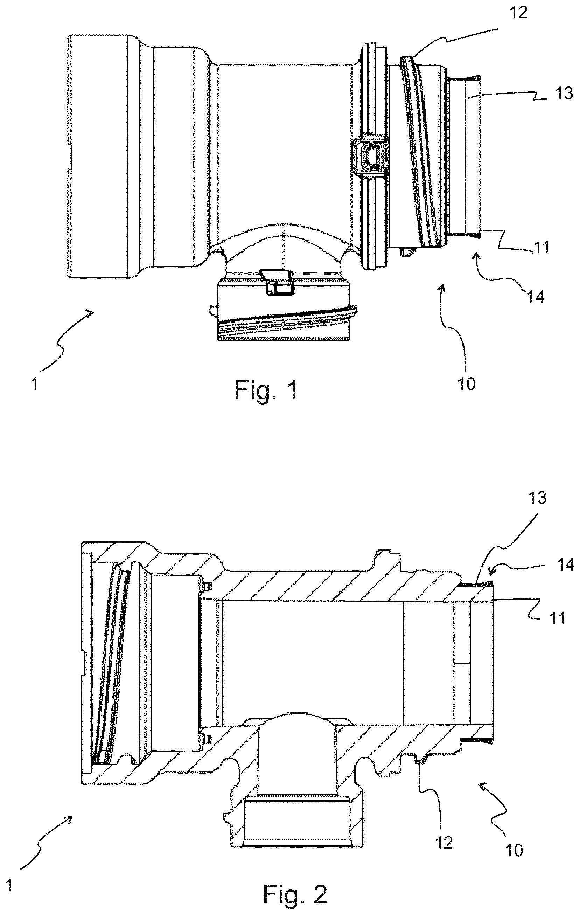

Figure 1 shows a pipe part 1 having a male end 10 and the figure 2 shows a cross-sectional view of the same pipe part. The male end 10 has an annular male pipe end 11, which male end is configured to be installed inside a pipe part having a female end. The pipe part 1 comprises an inner surface, which defines the inner conduit of the pipe part, and an outer surface defining the outer perimeter of the pipe part. The pipe part 1 comprises a connection element 12 for connecting the male end to the pipe part having the female end. The connection element 12 is arranged at the outer surface of the male end 10 so that may be connected to a corresponding connection element on an inner surface of the female end. The connection element 12 on the outer surface of the male end 10 is arranged at a distance from the male pipe end 11. The male end 10 comprises a first circumferential sealing surface 12 arranged on the outer surface at a distance from the male pipe end 11. The first circumferential sealing surface 12 is arranged between the male pipe end 11 and the connection element 12 on the outer surface of the male end. The male end 10 comprises an annular lip section 14 which is between the male pipe end 11 and the first circumferential sealing surface 13. The annular lip section has an inner diameter and an outer diameter. The outer diameter of the lip section increases towards the male pipe end 11. Optionally or additionally, the inner diameter of the lip section 14 may increase towards the male pipe end 11.

The connection element 12 on the male end may comprise for example threads, circumferentially extending protrusions, e.g. partial threads, or radially projecting cam. The connection element is arranged on the outer surface, i.e. outside of the pipe part. The connection element 12 of the male end 10 is configured to be connected to the corresponding connection element of the female end, which female connection element comprises threads or recesses.

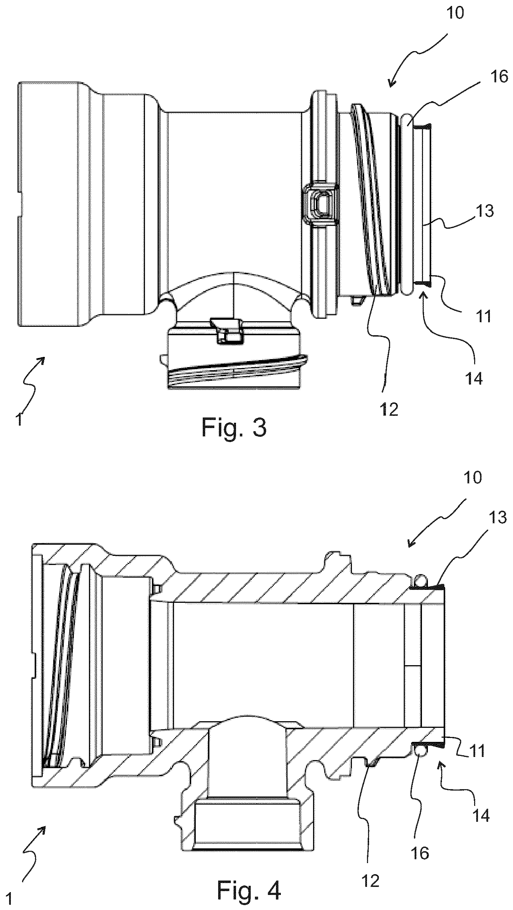

Figure 3 shows similar pipe part as figure 1 with additional features, and figure 4 shows a cross-sectional view of the pipe part of figure 3. The male end 10 comprises a sealing ring 16, such as O-ring, which is provided at the first circumferential sealing surface 13. The sealing ring 16 are arranged to engage with the sealing surface of the female end for sealing the connection when the male end is connected to the female end. As the first sealing surface 13 with the sealing ring 16 is located between the male pipe end 11 and the connection element 12, the connection is sealed, and no leakage is allowed between the male end and the female end when they are fastened to each other. The internal pressure inside the connection pushes the first circumferential sealing surface 12 of the male end 11 towards the female end and the sealing gets tighter.

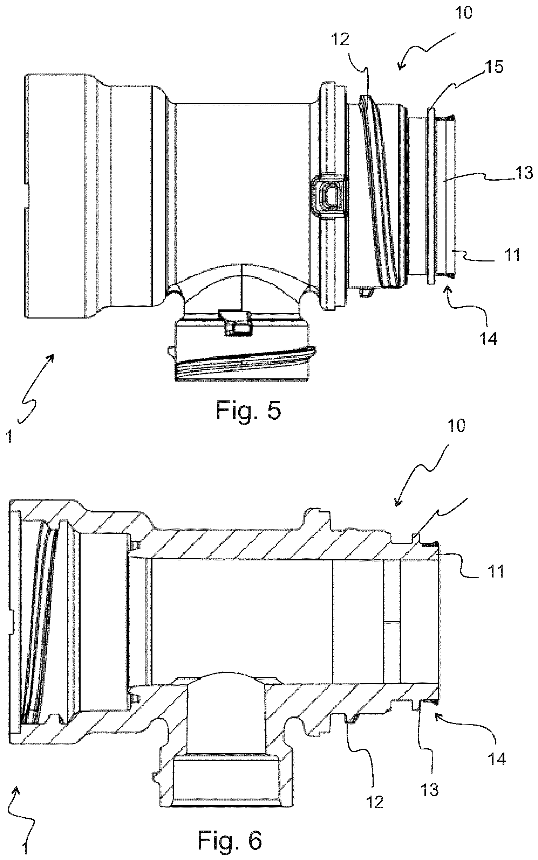

Figures 5 shows a similar pipe part 1 as figure 1 but, the first circumferential sealing surface 13 comprises an annular protrusion 15, which extends radially outwards from the first circumferential sealing surface. Figure 6 shows a cross-sectional view of figure 5. The cross-sectional shape of the annular protrusion may be rectangular, as shown in figures 5 and 6, or triangular. Optionally, the tip of the annular protrusion is rounded.

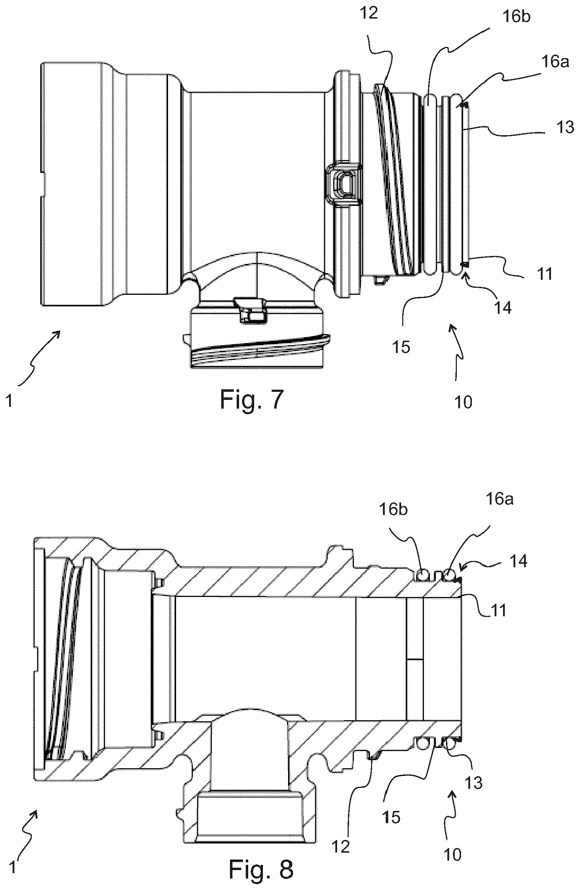

Figure 7 shows similar pipe part as figure 5 but two sealing rings 16a, 16b are provided at the first circumferential sealing surface 13 so that the annular protrusion 15 is between the two sealing rings. With the two sealing rings and the annular protrusion between the sealing rings, the connection is even more robust. Figure 8 shows a cross-sectional view of the pipe part 1 of figure 7.

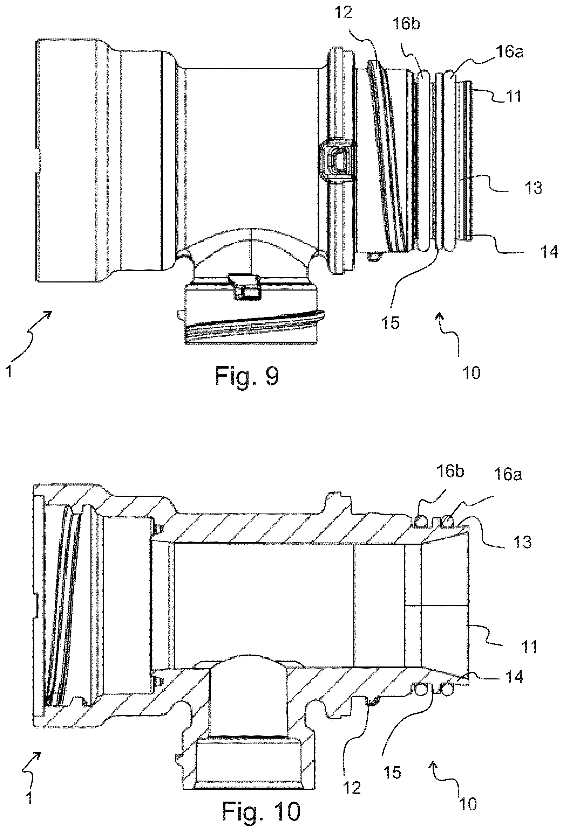

Figure 9 shows similar pipe part as figure 7 but the male end has a diameter which is greater at the male pipe end 11 than at the first circumferential sealing surface 13. The male pipe end 11 comprises a lip section 14, wherein the outer diameter of the lip section increases from the first circumferential sealing surface 13 towards the male pipe end 11. Additionally, the inner diameter of the lip section 14 increases towards the male pipe end 11, i.e. the inner shape of the conduit inside the male end is conical at the lip section so that the inner diameter increases towards the male pipe end 11. The optional lip section at the male pipe end 11 prevents the sealing ring from slipping off from the first circumferential sealing surface 13. The diameter may be internal diameter and/or outer diameter of the male end. Figure 10 is a cross-sectional view of pipe part of figure 9.

Although, the increasing diameter of the pipe end and the lip section is shown together with annular protrusion 15 and two sealing rings 16a, 16b, it is clear that such increasing diameter and the lip section may beimplemented to any embodiments shown in any other figures.

By having the first circumferential sealing surface between the male pipe end and the connection element of the male end, the first circumferential sealing surface may be manufactured, e.g. by molding, without any seams on the sealing surface. As the seams on the sealing surface has been found to cause leakages, the sealing surface without any seams is more leakage-proof.

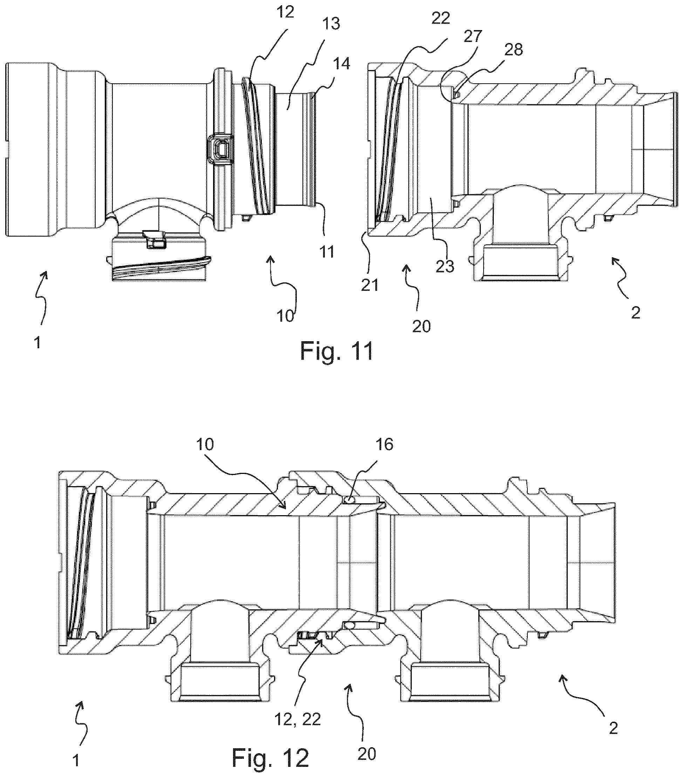

Figures 11 to 13 show a connection between two pipe parts 1, 2 in more detail. Figure 11 show the two pipe parts separated before they are connected to each other, wherein the other pipe part 2 is shown as a cross sectional view. One of the pipe parts 1 comprises a male end 10 and the other pipe part 2 comprises female end 20. The two pipe parts may be connected to each other by positioning the male end 10 to the female end 20 with connection elements 12, 22. Optionally, the two pipe parts are connected to each other by positioning the male end 10 to the female end 20 with connection elements 12, 22 such that the pipe parts 1, 2 are rotated with respect to each other when they are connected.

The male end 10 comprises a male pipe end 11, a male connection element 12 and a first circumferential sealing surface 13. The male connection element 12 is arranged on an outer surface of the male end and at a distance from the male pipe end 11. The first circumferential sealing surface 13 is also arranged on the outer surface of the male end 10 and at a distance from the male pipe end 11. The first circumferential sealing surface 13 is arranged between the male pipe end 11 and the male connection element 12. An annular lip section 14 is provided between the male pipe end 11 and the first circumferential sealing surface 13. The annular lip section has an inner diameter and an outer diameter. The outer diameter of the lip section increases towards the male pipe end 11. Further, the inner diameter of the lip section 14 increases towards the male pipe end 11.

The female end comprises a female pipe end 21, a female connection element 22 and a second circumferential sealing surface 23. The female connection element 22 is arranged on an inner surface of the female end and at a distance from the female pipe end 21. The second circumferential sealing surface 23 is also arranged on the inner surface of the female end 20 and at a distance from the female pipe end 21.

The female end 20 may comprise an annular connection surface 27 extending from the second circumferential sealing surface 23 towards a central axis of the female end, i.e. the annular connection surface 27 is inside the female end 11 and extends towards the inner conduit of the female end. Optionally, the annular connection surface 27 is inclined, or the connection surface 27 is perpendicular to the second circumferential sealing surface 23. The annular connection surface 27 may comprise an annular recess 28 for receiving the male pipe end 11. With the annular recess 28, the connection is more robust, and it helps to prevent any leakages between the two pipe parts. The annular recess may have an inclined surface for receiving the conical shape of the male pipe end having a lip section.

The figures 11 to 13 shows the female end 20 comprising an annular connection surface 27 which is perpendicular to the second circumferential surface 23. The annular connection surface 27 is arranged at a distance from the female pipe end 21 so that the female connection element 22 and the second circumferential sealing surface 23 are between the female pipe end 21 and the annular connection surface 27. The connection surface 27 comprises an annular recess 28 for receiving the male pipe end 11.

Figure 12 shows a cross-sectional view of the two pipe parts 1, 2 connected to each other. The male end 10 is connected to the female end 20, and the first circumferential sealing surface 13 and the second circumferential sealing surface 23 are positioned aligned with each other to seal the connection between the two pipe parts. The male pipe end 11 is at the annular recess 28 of the connection surface 27 of the female end 20.

The male connection element 12 on the male end 10 may comprise for example threads, circumferentially extending protrusions, e.g. partial threads, or radially projecting cam. The male connection element is arranged on the outer surface of the male end, i.e. outside of the pipe part. The connection element 12 of the male end 10 is configured to be connected to the corresponding female connection element 22, which female connection element 22 comprises corresponding threads or recesses for receiving the male connection element. The female connection element 22 is arranged on the outer surface of the female end, i.e. inside of the pipe part. The connection elements may be a bayonet catch.

An annular lip section 14 is provided between the male pipe end 11 and the first circumferential sealing surface 13. The annular lip section has an inner diameter and an outer diameter. The outer diameter of the lip section increases towards the male pipe end 11. Further, the inner diameter of the lip section 14 increases towards the male pipe end 11, i.e. the inner shape of the conduit inside the male end 10 is conical at the lip section 14 so that the inner diameter increases towards the male pipe end 11.

As shown in figures 11 to 13, the first circumferential sealing surface 13 of the male end 10 comprises an annular protrusion 15, which extends radially outwards from the first circumferential sealing surface 13. The cross-sectional shape of the annular protrusion may be rectangular or triangular. Optionally, the tip of the annular protrusion is rounded.

The male end comprises may comprise at least one sealing ring 16, such as O-ring, which is provided at the first circumferential sealing surface 13, as shown in figures 12. The sealing ring is arranged to engage with the second circumferential sealing surface 23 of the female end 20 for sealing the connection when the male end is connected to the female end. As the first circumferential sealing surface 13 with the sealing ring 16 is located between the male pipe end 11 and the male connection element 12, the connection is sealed, and no leakage is allowed between the male end 10 and the female end 20. The internal pressure inside the connection pushes the first circumferential sealing surface of the male end towards the female end and the sealing gets tighter. The optional lip section 14 at the male pipe end prevents the O-ring from slipping off from the first circumferential sealing surface.

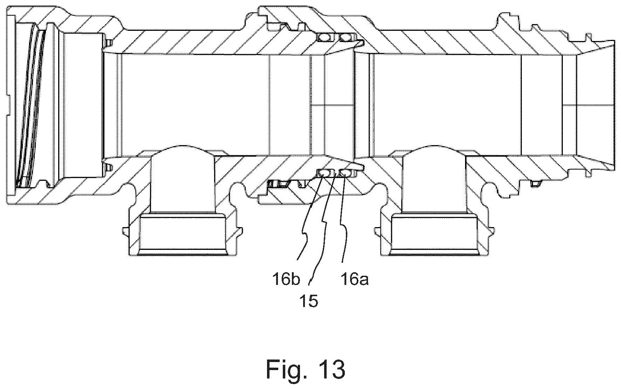

In figure 13, two sealing rings are provided at the first circumferential sealing surface 12 of the male end 10 so that an annular protrusion 15 is between the two sealing rings 16a, 16b. With the two sealing rings and the annular protrusion between the sealing rings, the connection is even more robust.

By having the first circumferential sealing surface between the male pipe end and the connection element of the male end, the first circumferential sealing surface may be manufactured, e.g. by molding, without any seams on the sealing surface. As the seams on the sealing surface has been found to cause leakages, the sealing surface without any seams is more leakage-proof. Optionally or additionally, the second circumferential sealing surface of the female end is seamless.

At least one of the pipe parts is a manifold.

Although the invention has been the described in conjunction with a certain type of device, it should be understood that the invention is not limited to any certain type of device. While the present inventions have been described in connection with a number of exemplary embodiments, and implementations, the present inventions are not so limited, but rather cover various modifications, and equivalent arrangements, which fall within the purview of prospective claims.

## Claims

1. A pipe part (1) having a male end (10) comprising
- an annular male pipe end (11),
- a connection element (12) for connecting the male end to a pipe part having a female end, which connection element is arranged at an outer surface of the male end at a distance from the male pipe end (11), and
- a first circumferential sealing surface (13) arranged on an outer surface of the male end at a distance from the male pipe end (11),
wherein the first circumferential sealing surface (13) is arranged between the male pipe end (11) and the connection element (12),
char act e r i zed in that
an annular lip section (14) is provided between the male pipe end (11) and the first circumferential sealing surface (13) so that outer diameter of the lip section (14) increases towards the male pipe end (11).

2. A pipe part according to claim 1, wherein the connection element comprises threads, circumferentially extending protrusion, or radially projecting cam.

3. A pipe part according to claim 1 or 2, wherein inner diameter of the lip section (14) increases towards the male pipe end (11).

4. A pipe part according to any one of the preceding claims, wherein the first circumferential sealing surface (13) comprises an annular protrusion (15) extending radially outwards from the first circumferential sealing surface.

5. A pipe part according to any one of the preceding claims, wherein at least one sealing ring (16) is provided at the first circumferential sealing surface (13) .

6. A pipe part according to claim 4, wherein two sealing rings (16a, 16b,...) are provided at the first circumferential sealing surface (13) so that the annular protrusion (15) is arranged between the two sealing rings.

7. A pipe part according to any one of the preceding claims, wherein the first circumferential sealing surface (13) is seamless.

8. A connection between two pipe parts (1, 2), wherein one of the pipe parts (1) comprises a male end (10) and the other pipe part (2) comprises a female end (20), whereby the two pipe parts are connectable together by positioning the male end (10) to the female end (20) with connection elements (12, 22), wherein
the male end (10) comprises
- a male pipe end (11),
- a male connection element (12) arranged on an outer surface of the male end at a distance from the male pipe end (11), and
- a first circumferential sealing surface (13) arranged on the outer surface (14) of the male end at a distance from the male pipe end (11), and
the female end (20) comprises
- a female pipe end (21),
- a female connection element (22) arranged on an inner surface of the female end at a distance from the female pipe end (21), and
- a second circumferential sealing surface (23) arranged on the inner surface of the female end at a distance from the female pipe end (21),
whereby the first and second circumferential sealing surfaces (13, 23) are positioned aligned with each other to seal the connection between the two pipe parts, wherein the first circumferential sealing surface (13) is arranged between the male pipe end (11) and the male connection element (12)
char act e r i zed in that
an annular lip section (14) is provided between the male pipe end (11) and the first circumferential sealing surface (13) so that outer diameter of the lip section (14) increases towards the male pipe end (11).

9. A connection according to claim 8, wherein the connection elements (12, 22) comprise threads or bayonet catch.

10. A connection according to claim 8 or 9, wherein inner diameter of the lip section (14) increases towards the male pipe end (11).

11. A connection according to any one of claims 8 to 10, wherein the first circumferential sealing surface (13) comprises an annular protrusion (15) extending radially outwards from the first annular sealing surface.

12. A connection according to any one of claims 8 to 11, wherein at least one sealing ring (16) is provided at the first circumferential sealing surface (13) for sealing the connection between the male end and the female end.

13. A connection according to claim 11 or 12, wherein two sealing rings (16a, 16b,...) are provided at the first circumferential sealing surface (13) so that the annular protrusion (15) is arranged between the two sealing rings.

14. A connection according to any one of claims 8 to 13, wherein the female end (20) comprises an annular connection surface (27) extending from the second circumferential sealing surface (23) towards a central axis of the female end.

15. A connection according to claim 14, wherein the annular connection surface (27) comprises an annular recess (28) for receiving the male pipe end (11).

16. A connection according to any one of claims 8 to 15, wherein at least one of the first circumferential sealing surface (13) and the second circumferential sealing surface (23) is seamless.

17. A connection according to any one of claims 8 to 16, wherein the two pipe parts (1, 2) are connectable together by positioning the male end (11) to the female end (21) with connection elements (12, 22), such that the pipe parts are rotated with respect to each other when they are connected.
